# EUROPEAN PATENT SPECIFICATION

(11) **EP 2 463 792 B1**
(45) Date of publication and mention of the grant of the patent: **08.01.2020**
(21) Application number: 10405221.2
(22) Date of filing: 17.11.2010
(51) Int. Cl.: G06F 17/50

(54) **Method and system for processing and displaying sheet-metal-forming simulation parameters**
Verfahren und System zur Verarbeitung und Anzeige von Parametern einer Simulation der Formung von Metallblechen
Procédé et système pour traiter et afficher des paramètres de simulation de l'emboutissage de tôles métalliques

(43) Date of publication of application: 13.06.2012
(73) Proprietor: Autoform Engineering GmbH, 8832 Wilen b. Wollerau (CH)
(72) Inventor: Kubli, Waldemar, 8173 Neerach (CH); Krainer, Andreas, 5400 Baden (CH)
(74) Representative: Frei Patent Attorneys

(56) References cited:
- eta Inc.: "eta/DYNAFORM User's manual, Version 5.5, Chapter 8", eta Inc. , 2006, pages 302-398, XP002621223, Retrieved from the Internet: URL:http://www.dynamore.de/documents/manua ls/eta-dynaform-manuals/archiv/dynaform-5. 5-user-manual [retrieved on 2011-02-08]

## Description

The invention relates to a method and apparatus for the numerical simulation of sheet metal forming processes as described in the preamble of the corresponding independent claims.

### BACKGROUND

Formed metal parts and in particular formed sheet metal parts are manufactured in multicomponent forming presses by deep drawing, restriking, folding, trimming, etc., involving different forming tools.

For the configuration of metal forming tools (for example, punches, dies, and blank holders), as well as for the configuration of metal forming processes (for example, tool forces, draw beads, lubrication, shape, and material for the sheet metal blank), CAD/CAE (computer aided design/computer aided engineering) programs are utilized. These simulate and model, respectively, a metal forming process by means of finite elements (FEM) on the basis of simulation parameters. Simulation parameters describe
- the geometry or shape of the forming tools utilized in the metal forming process,
- process parameters or metal forming parameters, such as the lubrication, processing forces, drawbeads, etc.
- material parameters of the material being formed, such as thickness, rolling direction, elastic properties, yield and hardening behaviour, physical characteristics etc.

The simulation programs create, by numerical simulation, result values comprising a description of the geometry of a sheet metal part after the forming process as well as the distribution of state variables, such as elongations and stresses in the formed sheet metal part. They also may calculate, from the result values, values of certain characteristic variables, called performance variables, which express a quality of the formed sheet metal part. Different types of performance variables and visual representations of the result values and performance variables can be computed and displayed in a post-simulation analysis. Correspondingly, further sets of parameters are used to control the numerical simulation itself (control parameters) and to control different types of post-simulation analysis (analysis parameters).

eta Inc.: eta/DYNAFORM Users manual, Version 5.5, Chapter 8, published by eta Inc., 2006, pages 302-398 (www.dynamore.de/documents/manuals/eta-dynaform-manuals/archiv/dynaform-5.5-user-manual) discloses a GUI for setting up a forming simulation, including a multitude of dialog windows for setting simulation parameters.

There is a need to provide users with assistance in performing standardized simulations and analysis of the results. For these purposes, it is known to provide users with default values for parameters, or to load given sets of parameters ("user configurations") and it is also known, from other domains, to enforce user input into so-called "required" fields. However, such existing approaches do not sufficiently alleviate the problems encountered when handling large numbers of parameters in an effort to enforce standardized procedures in a multi-user, multi-company setting.

### BRIEF SUMMARY OF THE INVENTION

Many of the embodiments described herein are generally directed to a method and apparatus for the numerical simulation of sheet-metal-forming processes of the type mentioned initially, which overcomes the disadvantages mentioned above.

These objects are achieved by a method and computing system for displaying sheet-metal-forming simulation parameters according to the corresponding claims.

In a method for the numerical simulation of sheet-metal-forming processes, performed by a processor of a computing system by means of a simulation program wherein the numerical simulation and further aspects of the operation of the simulation program are controlled by a set of sheet-metal-forming simulation parameters, the method for displaying the sheet-metal-forming simulation parameters comprises the steps of:
- maintaining in computer storage a set of active values of the parameters, controlling the operation of the simulation program;
- maintaining in computer storage a data set defining standard values of the parameters, used as a reference;
- maintaining in computer storage a set of type flags indicating, for each of the parameters, whether the parameter is of type "standard" or "nonstandard";
- maintaining in computer storage data representative of one or more display groups, each display group having assigned to it one or more parameters or other display groups;
- the processor determining, for each of the parameters, a status of the parameter, the status being either "compliant" or "noncompliant", the status being "noncompliant" if and only if the parameter is of type "standard" and the active value of the parameter is not equal to a standard value of the parameter, as defined by the data set defining standard values for this parameter;
- the processor determining, for each of one or more display groups, the status of the display group, the status being "noncompliant" if and only if the status of at least one of the parameters or other display groups assigned to the display group is "noncompliant" (This is logically equivalent to determining the status as being "compliant" if and only if the status of all parameters and other display groups assigned to the display group is "compliant");
- displaying, in a graphical user interface (GUI) being displayed on a display device of the computing system, at least one of
   ∘ GUI elements showing the active values of the parameters, and
   ∘ GUI elements associated with a display group;
- displaying, in the GUI, for each of the GUI elements, a visual indication of the status of the corresponding parameter or display group.

The sheet-metal-forming simulation parameters, or simply parameters, preferably comprise one or more of the following sets of parameters:
- Simulation parameters, which in turn preferably comprise one or more of the following sets of parameters:
   ∘ geometry of tools and/or parts
   ∘ process parameters of the process being simulated
   ∘ material parameters
   Simulation parameters may include nominal parameters and additional parameters defining a stochastic variation around the nominal parameters. Simulation parameters may be classified as being controllable or noncontrollable, i.e. disturbances.
- Control parameters (of numerical simulation).
- Analysis parameters for post-simulation analysis.

The parameters involved in the method may be all forming simulation parameters, or at least a subset of all forming simulation parameters. The parameters can be - depending on their meaning and context - of different types, such as numeric, logical, symbolic, text string, etc., as scalars or as arrays, and have corresponding values.

Whereas the active values (of scalar parameters or of entries in an array) are single values, used to control the operation of the simulation program, the data set defining standard values of the parameters can, for each parameter, define either a single value as well, or a range of values, or a test procedure. As long as the active value of a parameter is equal to the standard single value, or falls within the standard range of values, or satisfies the test procedure, it is considered to be standard. A test procedure can be a program subroutine associated with the parameter that takes a value as an input and returns a Boolean value indicating whether the value is standard. The test procedure may, when performing the test, take the active and/or standard values of other parameters into account. This allows the system to perform consistency checks involving two or more parameters.

In a preferred embodiment, the method comprises the step of displaying, in the GUI, for each of the parameters, in association with the GUI element that shows the value of the parameter, a **visual indication of the type** of the parameter. This allows for a quick, convenient visual check whether one or more parameters of a set of parameters being displayed are of the type "standard" or "nonstandard". The normal GUI that is used in operation of the simulation program is preferably used, making it easier for the user to orient herself in the various display elements such as screens, windows, panels, tabs, menus, drop-down lists, etc.... into which the GUI display of the parameters may be organized.

In a preferred embodiment, the method comprises the step of accepting a user input indicating a display group, and displaying parameters and/or other display groups assigned to the display group indicated by the user input. A display group may be, for example, a frame, window, panel, tab, drop-down list, etc., with the parameters being displayed and editable by means of, for example, GUI elements such as text boxes, list boxes, drop-down-lists, combo boxes, radio buttons, check boxes, datagrids, etc .... The input device typically is a pointing device such as a computer mouse, trackball, tablet or touch screen.

In a preferred embodiment, the method comprises the step of maintaining in computer storage a further set of parameter values, the values being default values of the parameters, and, if one parameter is not defined by the set of active values, setting its value to the default value. This allows, given an incompletely defined set of active values, to give all parameters a sensible value. For example, a user may define or import values for a subset of parameters, and use, for the remaining parameters, the default values.

In another preferred embodiment, a single set of parameters is used to represent both standard values and default values. Each parameter is associated with a flag indicating whether its value is a default value or a "dual-purpose" value for this parameter. If it is a default value, the corresponding parameter's active value may be set to this default value in an initialization phase or later, upon user input. If it is a "dual-purpose" value, the value can be used both as a default value and also as a standard value. As described above, using the value as a standard value means that it defines a reference against which an active value is checked, as. Consequently, when a default value is changed later on, e.g. by the user, this has no further effect on its status. However, when a parameter's value is changed from the default value which also is the standard value, the associated status changes to "noncompliant".

In a preferred embodiment, the method comprises the step of, in response to a user command, setting standard values to be equal to the corresponding active values and exporting, to a computer-readable data file, to be stored on a computer-readable medium, a representation of the standard values. Alternatively, the active values whose type indicates that they are standard values are exported as standard values (or as "dual-purpose" values), and optionally remaining values are exported as default values. This allows:
- in one variant, the system to save a particular set of values as standard values, to be used as a starting point for other simulations. Only a subset of parameter values may be exported and subsequently imported as active values, and then be combined with default values, as described above.
- in another variant, the system to use the saved set of values as standard values; that is, as a reference for checking a set of active values at a later time or at another location, as explained in connection with the importing step described below.

If the simulation configuration whose active values are being exported does not define the complete set of parameters, then the values for undefined parameters can be retrieved from stored standard values and used in the exporting step.

The export of the standard values may be performed by the simulation program itself, or by a separate program which reads at least the active values and type flags from a file generated by the simulation program, or receives them from the simulation program by an interprocess communication channel. In a preferred embodiment, the separate program comprises all or a subset of the standard values as part of the program itself, and exports them together with zero or more of the active values. In a preferred embodiment, the separate program accepts a user input defining at least one parameter value and an associated type flag and exports them in the same way.

In a preferred embodiment, the method comprises the step of importing, from a computer-readable data file stored on a computer-readable medium, a representation of the data set defining standard values, and importing, from a different computer-readable data file, a representation of the active values, and subsequently performing the steps specified above for determining and displaying the status of the parameters and display groups.

This allows a user to establish a standard for simulation and/or analysis runs, and to check existing parameter sets for adherence to the standard. In a typical setting, a manufacturer; e.g., an automobile manufacturer; defines how numerical simulations for the forming of parts made by a subcontractor should be performed. For this purpose, the manufacturer generates, in his copy of the simulation program and in the manner described above, a data file defining standard values. The data file is sent to the subcontractor which then imports the data file into his copy of the simulation program. The subcontractor can use the parameters as defined by the data file as a starting point for his simulations of the forming process for the part. The results of the subcontractor's simulations, together with the parameters used in those simulations, is sent back to the manufacturer. The manufacturer imports the results into his copy of the simulation tool, thereby setting the active parameters to the values of the parameters used in the simulations. In order to check whether the parameters used by the subcontractor adhere to the standard defined by the manufacturer, the manufacturer imports the original data file defining standard values. The program then determines whether the active parameters adhere to the standards defined by the original data file and displays the status of the parameters accordingly. Thanks to the inventive highlighting of the status (compliant/noncompliant) of each parameter or groups of parameters, the manufacturer can easily, within the same GUI of the simulation tool, check whether the simulations parameters are compliant, and which of them, if any, are not.

Optionally, in an initialization step, the processor imports a representation of the standard values and sets the active values of the parameters to be equal to the imported standard values. That is, the standard values are used as default values.

In brief, the above process involves, at the manufacturer, the steps of
- importing, from one or more computer-readable data files stored on a computer-readable medium, result data representing the results of a numerical simulation of a sheet-metal-forming process, and active value data representing a set of active values of the parameters used in performing the same numerical simulation;
- importing, from one or more further computer-readable data files stored on a computer-readable medium, a representation of a data set defining standard values, that can be used as a reference;
- automatically determining, for parameters and display groups, the status;
- displaying in the GUI, the parameters and display groups along with their status;
- displaying, in the GUI, as part of the normal operation of the simulation tool, a graphical representation of the result data. Typically, this is a 2D projection of a 3D view of the formed part, along with additional information visualizing the result data.

In a preferred embodiment, the method comprises the step of, in response to a user command, replacing the data set defining standard values by loading from a computer-readable data file, stored on a computer-readable medium, a representation of a different data set defining standard values, re-computing the status of the parameters and display groups, and updating, for each of the GUI elements displayed, the visual indication of the status of the corresponding parameter or display group. This allows a user to verify whether an existing active data set; e.g., after modification by the user; is compliant with one or more given standards.

In a preferred embodiment, the method comprises the step of, in response to a user command, and for each or for a subset or a single one of the parameters, setting the active value to be equal to a corresponding standard value. This allows a user to force an active value to be compliant with the standard. For example, a single parameter may be set by means of a context menu associated with the GUI element displaying the parameter.

In a preferred embodiment, the set of parameters is divided into several subsets of parameters, for example, one or more of a first subset comprising control parameters defining the numerical simulation parameters, a second subset comprising analysis parameters defining a post-simulation analysis of the numerical simulation, a third subset comprising geometry and process parameters, and a forth subset comprising material parameters. This allows a user to apply the steps as explained in the above; e.g., for the import, export, comparing, and setting equal of parameter values; selectively for one or more subsets of the parameters.

In a preferred embodiment, a computer program product for the simulation of sheet-metal-forming processes is loadable into an internal memory of a digital computer or a computer system, and comprises computer-executable instructions to cause one or more processors of the computer or computer system execute the simulation method. In another preferred embodiment, the computer program product comprises a computer-readable medium having the computer-executable instructions recorded thereon. The computer-readable medium preferably is non-transitory; that is, tangible. In still another preferred embodiment, the computer program is embodied as a reproducible computer-readable signal, and thus can be transmitted in the form of such a signal.

Nothing in the above brief summary is intended to limit the scope of the patent claims, or limit the scope of the balance of this specification.

### BRIEF DESCRIPTION OF THE DRAWINGS

The subject matter of the invention will be explained in more detail in the following text with reference to exemplary embodiments which are illustrated in the attached drawings, in which:
- Fig. 1: schematically shows a structure of a preferred embodiment of a sheet-metal-forming parameter simulator system;
- Fig. 2: shows an example of part of a GUI in a first state;
- Fig. 3: shows the same part of the GUI depicted in Fig. 2 in a second state;
- Fig. 4: shows a higher level display comprising the GUI of Figs. 2 and 3; and
- Fig. 5: shows a flow diagram of a preferred embodiment of a sheet-metal-forming parameter-simulation process.

The reference symbols used in the drawings, and their meanings, are listed in summary form in the list of reference symbols. In principle, identical parts are provided with the same reference symbols in the figures.

### DETAILED DESCRIPTION

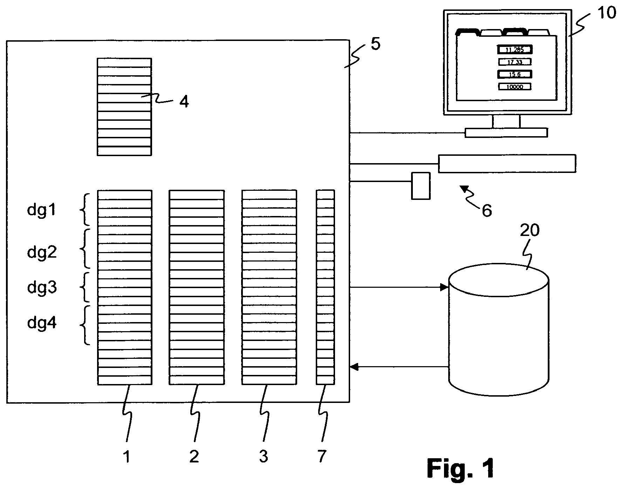

**Fig. 1** schematically shows a structure of a preferred embodiment, with a processing unit **5** operatively coupled to a display **10** and a persistent storage unit **20,** as well as input devices **6** such as a keyboard and/or pointing device, such as a computer mouse. The processing unit **5** comprises a processor and random access memory. It is programmed to perform numerical simulation of sheet-metal-forming operations, with the simulation being controlled by a set of parameters. The processing unit **5** maintains, in random access memory or in persistent storage, three sets of parameter values which often, but not necessarily, differ from one another. A first set of values of these parameters, called active parameter values **1,** is used when performing the numerical simulation. A second set called standard parameter values **2** is used as a reference. A third set, which may be optional, called default parameter values **3,** is used when values in the other sets are not defined. Alternatively, each member of the second set is associated with a flag **7** which indicates whether the member is to be used a standard parameter or a default parameter.

Each set may be subdivided into subsets, called storage groups, comprising different types of parameters such as simulation, control, and analysis type parameters. Each storage group can preferably be imported (retrieved from persistent storage) and exported (stored to persistent storage) and managed independent from the others. Alternatively or additionally, active parameter values and/or the standard parameter values are stored together with other simulation data in a single file. In another preferred embodiment, the standard values are stored as part of the simulation program or in a separate file.

Each parameter is associated with a Boolean type flag, of a stored set of type flags **7,** indicating whether the parameter is of type "standard" or "nonstandard". The parameters, and correspondingly also the parameter sets, are assigned to display groups **dg1-dg4.** Each display group **dg1-dg4** defines parameters and/or other display groups that are displayed together in a graphical user interface (GUI) rendered on the display **10.** Each display group **dg1-dg4** is associated with a label stored in a list of display group labels **4.**

In a generalized implementation, some or all of the standard parameter values are replaced by a definition of a parameter range, or even more general, by a test procedure that, given a parameter, determines whether it is compliant or not.

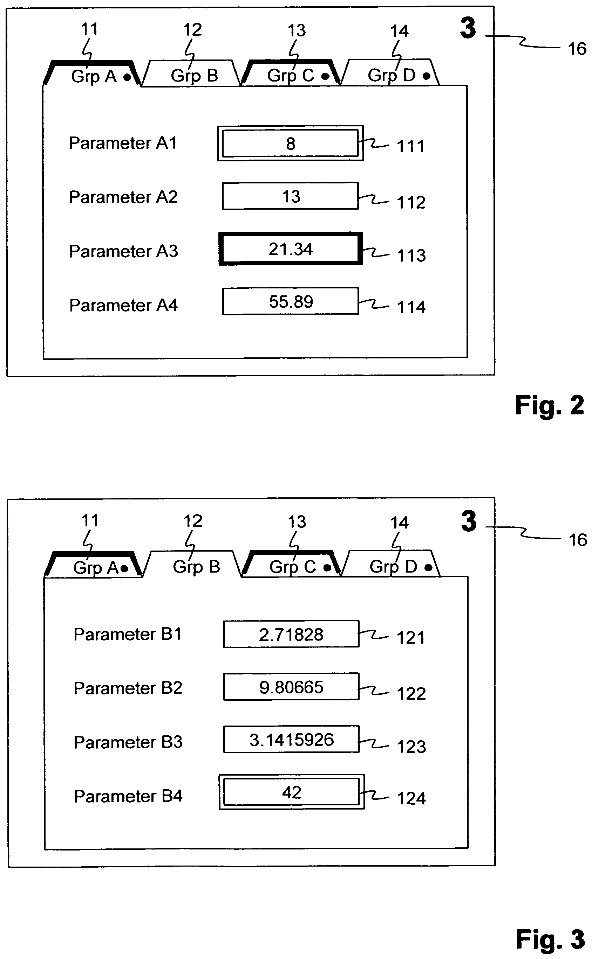

**Fig. 2** shows an example of part of a GUI in a first state, and **Fig. 3** the same part of the GUI in a second state. The part of the GUI is arranged in a subwindow or pane **16** of the display **10** and comprises four tabs **11-14** labeled "Grp A" through "Grp D". The pane itself is labeled with the number "3". In **Fig. 2****,** the contents of the first tab **11** are shown comprising text boxes **111-114,** each showing and preferably allowing a user to edit a value of a parameter, and each being associated with a label "Parameter A1" through "Parameter A4". Similarly, in **Fig. 3****,** the second tab **12** with text boxes **121-124,** each associated with one of labels "Parameter B1" etc. is shown. For each tab **11-14,** the set of parameters shown on the tab constitutes a display group. The label "Grp A" through "Grp D" of the tab is the GUI element associated with a display group. Naturally, in an actual implementation, the tabs and parameters will be labeled according to the nature of the parameters. Other GUI elements (not shown in the figures) indicating and allowing selection of the values of parameters may be check boxes, radio buttons, etc.

Usually, the values shown by the GUI elements are the active values, which are used when performing the simulation. In a preferred embodiment, the user may choose to display the standard or the default values instead. In another preferred embodiment, standard and/or default values are displayed as a tool tip or in a property dialog.

For each parameter that is a standard parameter, according to the associated type flag **7,** the status is determined by comparing the value of the active parameter with the associated value of the set of standard parameter values **2.** In a more general implementation, this comparison is replaced by a check whether the active value is within a range specified by a definition of standard values, or by executing a test procedure associated with the parameter. In any case, the status is determined as being "compliant" or "noncompliant". The status is displayed by a visual indication associated with the display of the parameter. In the present example, this is done by a thick line around the text box signifying "noncompliant", as for the box labeled **113** in **Fig. 2****.**

A visual indication of the type of the parameter ("standard" or "nonstandard") is preferably also displayed. In the present example, this is done by a second thin line around the text box, as for the boxes labeled **111** and **124** in **Fig. 2** and **3****,** respectively.

Both for the type and for the status, the way in which this visual indication is effected
- can take one or more of many forms, such as variation of color, texture, line thickness, font, font characteristics (bold, underline, caps), addition of graphical symbols such as a small dot included in a text box or next to a label or text box, etc., and
- can be tied to elements such as
   ∘ the characters of the text in the text box (or next to a radio button or check box), and/or
   ∘ the text box frame, and/or
   ∘ the label associated with the text box, and/or
   ∘ the background color and texture of any of these elements, and/or
   ∘ a GUI element associated with a single parameter or a group of parameters, wherein the GUI element is logically but not graphically associated with the parameters. For example, the GUI element is displayed in another area of the display as the parameter, but shows the name of the parameter.

The visual indication can be arranged to indicate by highlighting only the nonstandard and/or the noncompliant parameters, or vice versa, only the standard and/or compliant parameters.

For each group of parameters such as a tab, the status of the display group is determined as being "noncompliant" if at least one member of the display group is "noncompliant". The status of the display group is visually indicated in association with a label or other graphical element that represents the display group. In the present example, this is done with a thicker border of the respective tab. Thus, in **Fig. 2** it is immediately evident that not only the visible first tab 11 comprises noncompliant elements, but also the third tab **13.**

A display group **dg1-4** may have not only parameters but also other display groups assigned to it, and so the one-step hierarchy (based on tabs) shown is preferably extended to a multilevel hierarchy. For example, one of the tabs may comprise further tabs, or the whole of **Figs. 2** and **3** may be part of one subwindow or pane of a group of panes of which only one is displayed at a time, according to user selection. The GUI element allowing for the selection of these windows is also associated with a status, and has its status displayed. Thus the status is propagated and made visible recursively upwards through a hierarchy of display groups.

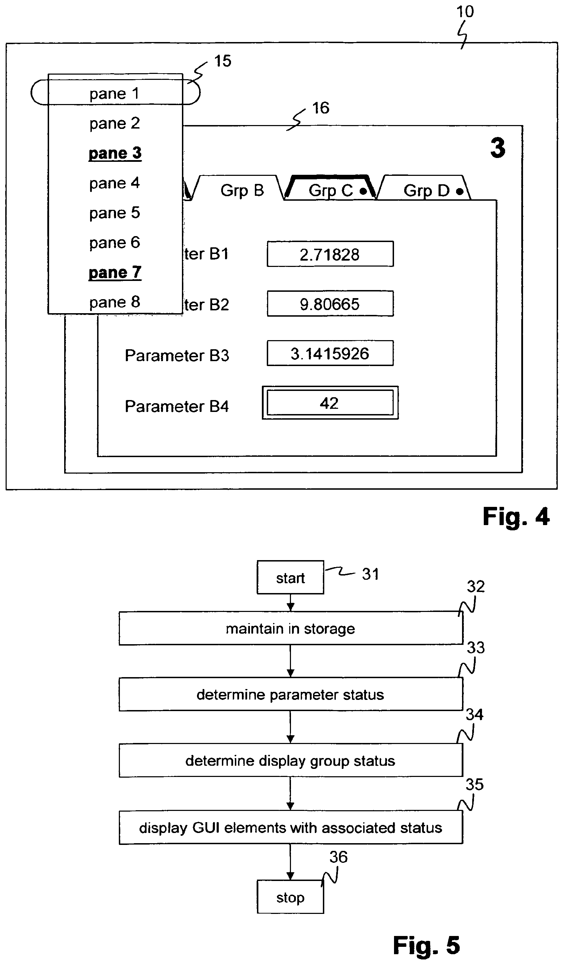

In the present example, **Fig. 4** shows the pane **16** of **Figs. 2** and **3** being displayed on the display **10,** with a drop-down list **15** configured to allow selection of the pane from a plurality of panes, each pane corresponding to a display group. The drop-down list is shown in its extended state. The labels **"pane 1"** through **"pane 8"** shown in the list are associated with a visual indication of the status of the corresponding display group or pane. In the present case, this is done by bold, underlined characters for the label, indicating that **"pane 3"** and **"pane 7"** are noncompliant.

**Fig. 5** shows a flow diagram of a preferred embodiment: Following a start and initialization **step 31,** the computing system maintains in computer storage (**step 32**) the set of active values of the parameters, the data set defining standard values, the set of type flags in storage, and the data representative of one or more display groups; such that part or all of this data is ready for retrieval and processing. In **step 33,** the processor determines, for each of the parameters, the status. In **step 34,** the processor determines for each of one or more display groups, the status of the display group. In **step 35,** the processor determines a visual representation of GUI elements for parameters, display groups and their status, and causes the display device to display them.

Some of the steps can be repeated at a later time, for example, when the user extends the simulation by activating or incorporating modules that involve further forming simulation parameters. Then these parameters are also initialized to their standard or default values, and their status is determined, etc., as described above.

While the invention has been described in present embodiments of the invention, it is distinctly understood that the invention is not limited thereto, but may be otherwise variously embodied and practiced within the scope of the claims.

### LIST OF DESIGNATIONS

- 1: active parameter values
- 2: standard parameter values
- 3: default parameter values
- 4: display group labels
- 5: processing unit
- 6: input device
- 7: type flags
- 10: display
- 11: first tab
- 12: second tab
- 13: third tab
- 14: fourth tab
- 15: drop-down list
- 16: sub window, pane
- 111-114: parameter edit (display and entry) fields of first tab
- 121-124: parameter edit fields of second tab
- 20: persistent storage
- dgl-4: display groups

## Claims

1. A method for displaying sheet-metal-forming simulation parameters of a program for the numerical simulation of sheet-metal-forming processes, the method being performed by a processor (5) of a computing system by means of a simulation program, wherein the numerical simulation and further aspects of the operation of the simulation program are controlled by a set of sheet-metal-forming simulation parameters, and wherein for displaying the sheet-metal-forming simulation parameters, the method comprises the steps of:
• maintaining in computer storage (2) a set of active values (1) of the parameters, controlling the operation of the simulation program;
• maintaining in computer storage (2) a data set defining standard values (2) of the parameters, used as a reference;
• maintaining in computer storage (2) a set of type flags (7) indicating, for each of the parameters, whether the parameter is of type "standard" or "nonstandard";
• maintaining in computer storage (2) data representative of one or more display groups (11, 12, 13, 14), wherein each display group (11, 12, 13, 14) has assigned to it one or more parameters or other display groups (11, 12, 13, 14);
• by the processor, determining, for each of the parameters, a status of the parameter, wherein the status is either "compliant" or "noncompliant", the status being "noncompliant" if and only if the parameter is of type "standard" and if and only if the active value (1) of the parameter is not equal to a standard value of the parameter, as defined by the data set defining standard values (2) for the parameter;
• by the processor, determining for each of one or more display groups (11, 12, 13, 14) the status of the display group (11, 12, 13, 14), wherein the status is "noncompliant" if and only if the status of at least one of the parameters or other display groups (11, 12, 13, 14) assigned to the display group is "noncompliant";
• displaying, on a display device (10) of the computing system, in a graphical user interface (GUI), at least one of
∘ graphical user interface elements (111-114, 121-124) showing the active values of the parameters, and
∘ graphical user interface elements (11, 12, 13, 14) associated with a display group; and
• displaying, on the display device (7) of the computing system, in the graphical user interface, for each of the graphical user interface elements, a visual indication of the status of the corresponding parameter or display group; and
• by the processor (5), accepting a user input indicating a display group, and displaying parameters and/or other display groups assigned to the display group indicated by the user input.

2. The method of claim 1, further comprising the step of displaying on the display device (7), in the graphical user interface, for each of the parameters, in association with the graphical user interface element that shows the value of the parameter, a visual indication of the type of the parameter.

3. The method of one of the preceding claims, further comprising the steps of:
• maintaining in computer storage (2) parameter values that are to be used as default values of the parameters,
∘ either by using a single set of parameters (2) to represent both standard values and default values and by associating each parameter with a flag indicating if its value is to be used only as a default value or as a "dual-purpose" value, that is, both as a default value and as a standard value;
∘ or by maintaining, in addition to the set defining standard values, a further set of parameter values (3) to be used as default values of the parameters; and
• if one parameter of the set of active values (1) is not defined, setting its value to the default value.

4. The method of one of the preceding claims, comprising the step of, by the processor (5), in response to a user command,
• either: exporting, to a computer-readable data file, active values (1) whose type indicates that they are standard values, as standard values, and optionally exporting remaining values as default values,
• or: setting standard values (2) to be equal to the corresponding active values (1) and exporting, to a computer-readable data file, a representation of the standard values.

5. The method of one of the preceding claims, further comprising the steps of:
• by the processor (5), importing from one or more computer-readable data files stored on a computer-readable medium (20) a representation of the data set defining standard values (2);
• importing, from one or more different computer-readable data files stored on a computer-readable medium (20) a representation of the active values (1); and
• subsequently performing the steps specified in claim 1 for determining and displaying the status of the parameters and display groups.

6. The method of one of the preceding claims, further comprising the steps of:
• by the processor (5), importing from one or more computer-readable data files stored on a computer-readable medium (20) a representation of the data set defining standard values (2);
• by the processor, setting the active values (1) of the parameters to be equal to the imported standard values;
• by the processor, in response to a user command, modifying at least one of the active values (1); and
• subsequently performing the steps specified in claim 1 for determining and displaying the status of the parameters and display groups.

7. The method of one of the preceding claims, further comprising the steps of:
• by the processor (5), in response to a user command, replacing the data set defining standard values (2) by loading from one or more computer-readable data files stored on a computer-readable medium (20) a representation of a different data set defining standard values (2);
• re-computing the status of the parameters and display groups, and
• for each of the GUI elements displayed, updating the visual indication of the status of the corresponding parameter or display group.

8. The method of one of the preceding claims, further comprising the step of, by the processor (5), in response to a user command and for each or for a subset or a single one of the parameters, setting the active value (1) to be equal to a corresponding standard value.

9. The method of one of the preceding claims, wherein the set of parameters is divided into several subsets of parameters, the subsets of parameters comprising at least one of a first subset comprising control parameters defining the numerical simulation parameters, a second subset comprising analysis parameters defining a post-simulation analysis of the numerical simulation, a third subset comprising geometry and process parameters, and a forth subset comprising material parameters.

10. The method of one of the preceding claims, the method comprising the steps of:
• importing, from one or more computer-readable data files stored on a computer-readable medium (20), result data representing the results of a numerical simulation of a sheet-metal-forming process and active value data representing a set of active values (1) of the parameters used in performing the same numerical simulation;
• importing, from one or more further computer readable data files stored on a computer-readable medium, a representation of a data set defining standard values (2), that can be used as a reference;
• performing the steps of claim 1;
• displaying on the display device (7), in the graphical user interface, a graphical representation of the result data.

11. A non-transitory computer-readable medium comprising computer-executable instructions which, when executed by a processor of a computing system, cause the computing system to perform the method steps of one of claims 1 to 10.

12. A computer system programmed to perform the method steps of one of claims 1 to 10.

13. A method of manufacturing a non-transitory computer-readable medium, comprising the step of storing, on the computer-readable medium, computer-executable instructions which, when executed by a processor of a computing system, cause the computing system to perform the method steps of one of claims 1 to 10.

## Patentansprüche

1. Verfahren zum Anzeigen von Simulationsparametern einer Metallblechformung eines Programms für die numerische Simulation von Metallblechformungsprozessen, wobei das Verfahren durch einen Prozessor (5) eines Computersystems mithilfe eines Simulationsprogramms ausgeführt wird, wobei die numerische Simulation und weitere Aspekte des Ablaufs des Simulationsprogramms durch einen Satz von Simulationsparametern der Metallblechformung gesteuert werden, und wobei das Verfahren zum Anzeigen der Simulationsparameter der Metallblechformung die folgenden Schritte umfasst:
- Aufbewahren in einem Computerspeicher (2) eines Satzes von aktiven Werten (1) der Parameter, die den Ablauf des Simulationsprogramms steuern;
- Aufbewahren in dem Computerspeicher (2) eines Datensatzes, der Standardwerte (2) der Parameter definiert, die als Referenz verwendet werden;
- Aufbewahren in dem Computerspeicher (2) eines Satzes von Typenkennzeichnungen (7), die für jeden der Parameter anzeigen, ob der Parameter vom Typ "Standard" oder "Nichtstandard" ist;
- Aufbewahren in dem Computerspeicher (2) von Daten, die eine oder mehrere Anzeigegruppen (11, 12, 13, 14) repräsentieren, wobei jeder Anzeigegruppe (11, 12, 13, 14) ein oder mehrere Parameter oder weitere Anzeigegruppen (11, 12, 13, 14) zugeordnet sind;
- durch den Prozessor, Ermitteln für jeden der Parameter eines Zustands der Parameter, wobei der Zustand entweder "konform" oder "nichtkonform" ist, wobei der Zustand dann und nur dann "nichtkonform" ist, wenn der Parameter vom Typ "Standard" ist und dann und nur dann, wenn der aktive Wert (1) des Parameters nicht gleich einem Standardwert des Parameters ist, wie er von den einen Datensatz definierenden Standardwerten (2) für die Parameter definiert wird;
- durch den Prozessor, Ermitteln für jede von einer oder mehreren Anzeigegruppen (11, 12, 13, 14) des Zustands der Anzeigegruppe (11, 12, 13, 14), wobei der Zustand dann und nur dann "nichtkonform" ist, wenn der Zustand von mindestens einem der Parameter oder weiterer Anzeigegruppen (11, 12, 13, 14) die der Anzeigegruppe zugeordnet sind, "nichtkonform" ist;
- Anzeigen, auf einer Anzeigevorrichtung (10) des Computersystems in einer grafischen Benutzeroberfläche (Graphical User Interface, GUI), mindestens eines von:
∘ grafischen Benutzeroberflächenelementen (111-114, 121-124), welche die aktiven Werte der Parameter zeigen, und
∘ grafischen Benutzeroberflächenelementen (11, 12, 13, 14), die einer Anzeigegruppe zugeordnet sind; und
- Anzeigen, auf der Anzeigevorrichtung (7) des Computersystems in der grafischen Benutzeroberfläche für jedes der grafischen Benutzeroberflächenelemente, einer optischen Anzeige des Zustands des entsprechenden Parameters oder der entsprechenden Anzeigegruppe; und
- durch den Prozessor (5), Akzeptieren einer Benutzereingabe, die eine Anzeigegruppe anzeigt, und Anzeigen von Parametern und/oder weiteren Anzeigegruppen, die der Anzeigegruppe zugeordnet sind, die durch die Benutzereingabe angezeigt wird.

2. Verfahren nach Anspruch 1, das außerdem den Schritt eines Anzeigens einer optischen Anzeige des Typs des Parameters auf der Anzeigevorrichtung (7) in der grafischen Benutzeroberfläche für jeden der Parameter in Zusammenhang mit dem grafischen Benutzeroberflächenelement umfasst, das den Wert des Parameters zeigt.

3. Verfahren nach einem der vorhergehenden Ansprüche, das außerdem die folgenden Schritte umfasst:
- Aufbewahren in dem Computerspeicher (2) von Parameterwerten, die als voreingestellte Werte der Parameter zu verwenden sind,
∘ entweder, in dem ein einziger Parametersatz (2) verwendet wird, um sowohl die Standardwerte als auch die voreingestellten Werte zu repräsentieren, und indem jedem Parameter eine Kennzeichnung zugeordnet wird, die anzeigt, ob sein Wert nur als ein voreingestellter Wert oder als ein "zweifach verwendbarerer" Wert zu verwenden ist, das heißt, sowohl als ein voreingestellter Wert als auch als ein Standardwert;
∘ oder indem zusätzlich zu dem Satz, der die Standardwerte definiert, ein weiterer Satz von Parameterwerten (3) aufbewahrt wird, um als voreingestellte Werte der Parameter verwendet zu werden; und
- wenn ein Parameter des Satzes von aktiven Werten (1) nicht definiert ist, Einstellen seines Wertes auf den voreingestellten Wert.

4. Verfahren nach einem der vorhergehenden Ansprüche, das als Reaktion auf einen Benutzerbefehl die durch den Prozessor (5) ausgeführten folgenden Schritte umfasst:
- entweder: Exportieren von aktiven Werten (1), deren Typ anzeigt, dass sie Standardwerte sind, als Standardwerte in eine computerlesbare Datendatei, und optionales Exportieren der verbleibenden Werte als voreingestellte Werte;
- oder: Einstellen der Standardwerte (2), sodass sie gleich den entsprechenden aktiven Werten (1) sind, und Exportieren einer Repräsentation der Standardwerte in eine computerlesbare Datendatei.

5. Verfahren nach einem der vorhergehenden Ansprüche, das außerdem die folgenden Schritte umfasst:
- durch den Prozessor (5), Importieren aus einer oder mehreren computerlesbaren Datendateien, die in einem computerlesbaren Medium (20) gespeichert sind, einer Repräsentation des Datensatzes, der die Standardwerte (2) definiert;
- Importieren aus einer oder mehreren anderen computerlesbaren Datendateien, die in einem computerlesbaren Medium (20) gespeichert sind, einer Repräsentation der aktiven Werte (1); und
- nachfolgend Ausführen der Schritte, die in Anspruch 1 zum Ermitteln und Anzeigen des Zustands der Parameter und der Anzeigegruppen spezifiziert sind.

6. Verfahren nach einem der vorhergehenden Ansprüche, das außerdem die folgenden Schritte umfasst:
- durch den Prozessor (5), Importieren aus einer oder mehreren computerlesbaren Datendateien, die in einem computerlesbaren Medium (20) gespeichert sind, einer Repräsentation des Datensatzes, der die Standardwerte (2) definiert;
- durch den Prozessor, Einstellen der aktiven Werte (1) der Parameter, sodass sie gleich den importierten Standardwerten sind;
- durch den Prozessor, als Reaktion auf einen Benutzerbefehl, Verändern mindestens eines der aktiven Werte (1); und
- nachfolgend Ausführen der Schritte, die in Anspruch 1 zum Ermitteln und Anzeigen des Zustands der Parameter und der Anzeigegruppen spezifiziert sind.

7. Verfahren nach einem der vorhergehenden Ansprüche, das außerdem die folgenden Schritte umfasst:
- durch den Prozessor (5), als Reaktion auf einen Benutzerbefehl, Ersetzen des Datensatzes, der die Standardwerte (2) definiert, indem aus einer oder mehreren computerlesbaren Datendateien, die in einem computerlesbaren Medium (20) gespeichert sind, eine Repräsentation eines anderen Datensatzes geladen wird, der die Standardwerte (2) definiert;
- Neuberechnen des Zustands der Parameter und der Anzeigegruppen; und
- für jedes der angezeigten GUI-Elemente, Aktualisieren der optischen Anzeige des Zustands des entsprechenden Parameters oder der entsprechenden Anzeigegruppe.

8. Verfahren nach einem der vorhergehenden Ansprüche, das außerdem den folgenden Schritt durch den Prozessor (5) ausgeführten Schritt umfasst: als Reaktion auf einen Benutzerbefehl und für jeden, oder für einen Teilsatz der, oder für einen einzigen, der Parameter, Einstellen, des aktiven Wertes (1), sodass er gleich einem entsprechenden Standardwert ist.

9. Verfahren nach einem der vorhergehenden Ansprüche, wobei der Parametersatz in mehrere Parameterteilsätze geteilt wird, wobei die Parameterteilsätze mindestens einen umfassen aus: einem ersten Teilsatz, der Steuerparameter umfasst, welche die numerischen Simulationsparameter definieren, einem zweiten Teilsatz, der Analyseparameter umfasst, die eine Nachsimulationsanalyse der numerischen Simulation definieren, einem dritten Teilsatz, der Geometrie- und Prozessparameter umfasst, und einem vierten Teilsatz, der Materialparameter umfasst.

10. Verfahren nach einem der vorhergehenden Ansprüche, wobei das Verfahren die folgenden Schritte umfasst:
- Importieren aus einer oder mehreren computerlesbaren Datendateien, die in einem computerlesbaren Medium (20) gespeichert sind, von Ergebnisdaten, welche die Ergebnisse einer numerischen Simulation eines Metallblechformungsprozesses repräsentieren, und von Daten von aktiven Werten, die einen Satz von aktiven Werten (1) der Parameter repräsentieren, die beim Ausführen derselben numerischen Simulation verwendet werden;
- Importieren aus einer oder mehreren weiteren computerlesbaren Datendateien, die in einem computerlesbaren Medium gespeichert sind, einer Repräsentation eines Datensatzes, der die Standardwerte (2) definiert, die als Referenz verwendet werden können;
- Ausführen der Schritte nach Anspruch 1;
- Anzeigen einer grafischen Darstellung der Ergebnisdaten auf der Anzeigevorrichtung (7) in der grafischen Benutzeroberfläche.

11. Nichtflüchtiges computerlesbares Medium, das auf einem Computer ausführbare Befehle umfasst, die, wenn sie von einem Prozessor eines Computersystems ausgeführt wird, das Computersystem veranlassen, die Verfahrensschritte nach einem der Ansprüche 1 bis 10 auszuführen.

12. Computersystem, das programmiert ist, um die Verfahrensschritte nach einem der Ansprüche 1 bis 10 auszuführen.

13. Verfahren zum Herstellen eines nichtflüchtigen computerlesbaren Mediums, das den Schritt eines Speicherns von auf einem Computer ausführbaren Befehlen in dem computerlesbaren Medium umfasst, die, wenn sie von einem Prozessor eines Computersystems ausgeführt wird, das Computersystem veranlassen, die Verfahrensschritte nach einem der Ansprüche 1 bis 10 auszuführen.

## Revendications

1. Procédé d'affichage de paramètres de simulation de façonnage de tôles métalliques d'un programme de simulation numérique d'opérations de façonnage de tôles métalliques, le procédé étant exécuté par un processeur (5) d'un système de calcul au moyen d'un programme de simulation,
la simulation numérique et d'autres aspects du fonctionnement du programme de simulation étant contrôlés par un jeu de paramètres de simulation du façonnage de tôles métalliques et pour l'affichage des paramètres de simulation du façonnage de tôles métalliques, le procédé comprend les étapes qui consistent à :
- conserver dans une mémoire d'ordinateur (2) un jeu de valeurs actives (1) des paramètres de contrôle du fonctionnement du programme de simulation,
- conserver dans une mémoire d'ordinateur (2) un jeu de données qui définissent des valeurs standard (2) des paramètres utilisées comme références,
- conserver dans une mémoire d'ordinateur (2) un jeu d'indicateurs de type (7) qui indiquent pour chaque paramètre s'il est de type "standard" ou "non standard",
- conserver dans une mémoire d'ordinateur (2) des données représentatives d'un ou plusieurs groupes d'affichage (11, 12, 13, 14), un ou plusieurs paramètres ou autres groupes d'affichage (11, 12, 13, 14) étant attribués à chaque groupe d'affichage (11, 12, 13, 14),
- pour chacun des paramètres, faire déterminer par le processeur le statut du paramètre, le statut étant "conforme" ou "non conforme" et le statut étant «non conforme» si et seulement si le paramètre est de type standard et si et seulement si la valeur active (1) du paramètre n'est pas égale à une valeur standard du paramètre définie par le jeu de données qui définit les valeurs standard (2) du paramètre,
- pour chacun des différents groupes d'affichage (11, 12, 13, 14), faire définir par le processeur le statut du groupe d'affichage (11, 12, 13, 14), le statut étant «non conforme» si et seulement si le statut d'au moins l'un des paramètres ou autres groupes d'affichage (11, 12, 13, 14) attribués au groupe d'affichage est «non conforme»,
- sur une interface graphique d'utilisateur (GUI) d'un dispositif d'affichage (10) du système de calcul, faire afficher :
des éléments (111-114, 121-124) d'interface graphique d'utilisateur qui montrent les valeurs actives des paramètres et
des éléments (11, 12, 13, 14) d'interface graphique d'utilisateur associés à un groupe d'affichage,
- pour chacun des éléments d'interface graphique d'utilisateur, faire afficher sur l'interface graphique d'utilisateur du dispositif d'affichage (7) du système de calcul une indication visuelle du statut du paramètre ou du groupe d'affichage correspondants et
- faire accepter par le processeur une entrée d'utilisateur indiquant un groupe d'affichage et faire afficher des paramètres et/ou d'autres groupes d'affichage attribués au groupe d'affichage indiqué par l'entrée d'utilisateur.

2. Procédé selon la revendication 1, comprenant en outre l'étape qui consiste pour chacun des paramètres à faire afficher sur l'interface graphique d'utilisateur du dispositif d'affichage (7) une indication visuelle du type du paramètre en association avec l'élément d'interface graphique d'utilisateur qui montre la valeur du paramètre.

3. Procédé selon l'une des revendications précédentes, comprenant en outre les étapes qui consistent à :
- conserver dans une mémoire d'ordinateur (2) des valeurs par défaut à utiliser comme valeurs par défaut des paramètres,
soit en utilisant un unique jeu de paramètres (2) pour représenter à la fois des valeurs standard et des valeurs par défaut et en associant à chaque paramètre un indicateur indiquant si sa valeur doit être utilisée uniquement comme valeur par défaut ou comme valeur à "double usage", c'est-à-dire à la fois comme valeur par défaut et comme valeur standard,
soit en maintenant en plus d'un jeu définissant des valeurs standard un autre jeu de valeurs (3) de paramètres à utiliser comme valeurs par défaut des paramètres et
- si l'un des paramètres du jeu de valeurs actives (1) n'est pas défini, lui donner la valeur par défaut.

4. Procédé selon l'une des revendications précédentes, comprenant en outre l'étape qui consiste à, en réponse à une commande de l'utilisateur :
- amener le processeur (5) à exporter comme valeurs standard sur un fichier de données lisible par ordinateur des valeurs actives (1) dont le type indique qu'elles sont des valeurs standard et facultativement l'amener à exporter les valeurs restantes comme valeurs par défaut,
- ou fixer comme valeurs standard (2) des valeurs égales aux valeurs actives (1) correspondantes et exporter sur un fichier de données lisible par ordinateur une représentation des valeurs standard.

5. Procédé selon l'une des revendications précédentes, comprenant en outre les étapes qui consistent à amener le processeur (5) :
- à importer d'un ou plusieurs fichiers de données lisible par ordinateur conservés sur un support (20) lisible par ordinateur une représentation du jeu de données définissant les valeurs standard (2),
- à importer d'un ou plusieurs fichiers de données lisible par ordinateur conservés sur un support (20) lisible par ordinateur une représentation des valeurs actives (1) et
- à exécuter ensuite les étapes définies par la revendication 1 de la détermination et de l'affichage du statut des paramètres et des groupes d'affichage.

6. Procédé selon l'une des revendications précédentes, comprenant en outre les étapes qui consistent à :
- amener le processeur (5) à importer depuis un ou plusieurs fichiers de données lisible par ordinateur conservés sur un support (20) lisible par ordinateur une représentation du jeu de données définissant les valeurs standard (2),
- amener le processeur à fixer comme valeurs actives (1) des paramètres des valeurs égales aux valeurs standard importées,
- en réponse à une commande de l'utilisateur, amener le processeur à modifier au moins l'une des valeurs actives (1) et
- exécuter ensuite les étapes définies par la revendication 1 de la détermination et de l'affichage du statut des paramètres et des groupes d'affichage.

7. Procédé selon l'une des revendications précédentes, comprenant en outre les étapes qui consistent à :
- en réponse à une commande de l'utilisateur, amener le processeur (5) à remplacer le jeu de données définissant les valeurs standard (2) en chargeant depuis un ou plusieurs fichiers de données lisible par ordinateur conservés sur un support (20) lisible par ordinateur une représentation d'un autre jeu de données définissant les valeurs standard (2),
- faire recalculer le statut des paramètres et groupes d'affichage et
- pour chacun des éléments GUI affichés, actualiser l'indication visuelle du statut du paramètre ou groupe d'affichage correspondants.

8. Procédé selon l'une des revendications précédentes, comprenant en outre l'étape qui consiste à, en réponse à une commande de l'utilisateur et pour chacun des paramètres, pour un sous-ensemble de ceux-ci ou pour un seul paramètre, amener le processeur (5) à fixer comme valeur active (1) une valeur égale à la valeur standard correspondante.

9. Procédé selon l'une des revendications précédentes, dans lequel le jeu de paramètres est divisé en plusieurs sous-ensembles de paramètres, les sous-ensembles de paramètres comprenant au moins un premier sous-ensemble contenant des paramètres de contrôle définissant les paramètres de la simulation numérique, un deuxième sous-ensemble contenant des paramètres d'analyse définissant une analyse post-simulation de la simulation numérique, un troisième sous-ensemble contenant des paramètres des paramètres géométriques et de traitement et un quatrième sous-ensemble contenant des paramètres de matériau.

10. Procédé selon l'une des revendications précédentes, le procédé comprenant les étapes qui consistent à :
- importer depuis un ou plusieurs fichiers de données lisible par ordinateur conservés sur un support (20) lisible par ordinateur des données de résultats représentant les résultats d'une simulation numérique d'une opération de façonnage de tôles métalliques et des données de valeurs actives représentant un jeu de valeurs actives (1) des paramètres utilisés dans l'exécution de cette simulation numérique,
- importer depuis un ou plusieurs fichiers de données lisible par ordinateur conservés sur un support lisible par ordinateur une représentation d'un jeu de données définissant des valeurs standard (2) qui peuvent être utilisées comme références,
- exécuter les étapes de la revendication 1 et
- afficher une représentation graphique des données de résultats sur l'interface graphique d'utilisateur du dispositif d'affichage (7).

11. Support non volatile lisible par ordinateur, contenant des instructions exécutables par ordinateur et qui amènent un système de calcul à mettre en oeuvre les étapes de traitement selon l'une des revendications 1 à 10 lorsqu'elles sont exécutées par un processeur du système de calcul.

12. Système informatique programmé pour mettre en oeuvre les étapes de traitement selon l'une des revendications 1 à 10.

13. Procédé de fabrication d'un support non volatile lisible par ordinateur, comprenant l'étape qui consiste à conserver sur le support non volatile lisible par ordinateur des instructions exécutables par ordinateur et qui amènent un système de calcul à mettre en oeuvre les étapes de traitement selon l'une des revendications 1 à 10 lorsqu'elles sont exécutées par un processeur du système de calcul.
